# EUROPEAN PATENT APPLICATION

(11) **EP 2 635 035 A1**
(43) Date of publication of application: **04.09.2013**
(21) Application number: 12397505.4
(22) Date of filing: 29.02.2012
(51) Int. Cl.: H04N 21/2543, H04N 21/2668, H04N 21/472, H04N 21/4788, H04N 21/6405

(54) **A method, an apparatus and a computer readable medium for delivering media content**

(71) Applicant: Teliasonera AB, 106 63 Stockholm (SE)
(72) Inventor: Kivirauma, Kimmo, 36100 KANGASALA AS (FI); Liljeroos, Ari-Pekka, 33960 PIRKKALA (FI); Bergström, John, 33950 PIRKKALA (FI)
(74) Representative: Palmgren, Eero Juhani

(57) **Abstract**

Various embodiments of the invention concern a method for delivering media content in social multicast environment comprising at least one server and at least two receiving clients and a network being formed between the server and the receiving clients. The method comprises receiving a request for media content transmission from a receiving client via the network. The request comprises at least information identifying the media content being requested and the number of receiving clients participating to the media content transmission in a common virtual space. A total price for the media content is determined based on the information being included in the request. This total price is divided between the receiving clients participating to the media content transmission in said common virtual space. Information on the payment divisions is delivered to said receiving clients participating to the media content transmission in the common virtual space. A confirmation is received when all payment divisions have been received. The method also comprises controlling that the number of the receiving clients in said common virtual space does not exceed the number of receiving clients in the request for media content transmission. The media content being requested is multicast to the receiving clients in the common virtual space; and the media content multicast is managed by at least one receiving client.

## Description

### Field of the Invention

The present invention relates generally to data delivery from a server to plurality of receiving clients. In particular, the invention relates to delivering media content in social multicast environment.

### Background of the Invention

Social television, i.e. Social TV, is a term to be used for a technology that combines TV viewing and social interaction between TV viewers through a certain network. This means that television viewers don't share a same physical room while watching the television, but can be located in a same virtual space (e.g. virtual room) in order to communicate (by chatting, by voice interaction) on the TV content. The Social TV can include also TV recommendations, voting, ratings, video conferencing and any other matter that can be related to interaction and communication with other users or with the television content.

Social TV is not necessarily dependent on time. Even though Social TV viewers can be gathered to watch e.g. a live-show, or a certain program that is streamed at a certain time, Social TV makes is possible users to determine which programs or which movies they would like to watch at desired time.

Term "Video on Demand" (VoD) is used for a content that can be downloaded or streamed from a server via e.g. Internet to user's computer being capable to access to web television, to user's IPTV STB (Internet Protocol Television Set Top Box), or to user's television having access to Internet. Payment of such VoD content can be made with a monthly fee or individually for each video content by the user who has ordered the VoD content.

### Summary of the Invention

Now there has been invented an improved method and technical equipment implementing the method, by which payable media content can be delivered in social multicasting environment, and by which paying of said payable media content can be performed individually. Social TV is an example of the social multicasting environment, and by means of the present solution, the social TV is also capable of sharing not only a payable content but also the payment of such content between viewers. Various aspects of the invention include a method, an apparatus and a computer readable medium comprising a computer program stored therein, which are characterized by what is stated in the independent claims. Various embodiments of the invention are disclosed in the dependent claims.

According to a first aspect, a method for delivering media content in social multicast environment comprising at least one server and at least two receiving clients and a network being formed between said at least one server and at least two receiving clients, wherein said method comprises receiving a request for media content transmission from a receiving client via said network, said request comprising at least information identifying the media content being requested and the number of receiving clients participating to said media content transmission in a common virtual space; determining a total price for the media content based on the information being included in the request; dividing the total price between the receiving clients participating to said media content transmission in said common virtual space; delivering information on the payment divisions to said receiving clients participating to said media content transmission in said common virtual space; receiving a confirmation when all payment divisions have been received; controlling that the number of the receiving clients in said common virtual space does not exceed the number of receiving clients in the request for media content transmission; multicasting the media content being requested to the receiving clients in said common virtual space; and managing the media content multicast by at least one receiving client.

According to an embodiment, the method comprises dividing the total price by the number of receiving clients or dividing the total price into cents.

According to an embodiment, the method comprises receiving a payment from at least one receiving client, wherein the received payments cover the total price.

According to an embodiment, the method comprises querying a price for the requested media content from a content server for determining the total price.

According to an embodiment, the method comprises delivering information on the payment divisions to a pricing server for collecting the payment divisions.

According to an embodiment, the content being requested is a video content.

According to an embodiment, the method comprises gathering the receiving clients into a virtual space.

According to a second aspect an apparatus for delivering media content in social multicast environment comprises a processor, memory including computer program code, the memory and the computer program code configured to, with the processor, cause the apparatus to perform at least the following: receiving a request for content transmission from a receiving client, said request comprising information identifying the content being requested and the number of receiving clients participating to said media content transmission in a common virtual space; determining a price for the content based on the information being included in the request; sharing out the price between the receiving clients participating to said media content transmission in said common virtual space; delivering payment shares to said receiving clients participating to said media content transmission in said common virtual space; receiving a confirmation when all payment shares have been received; controlling that the number of the receiving clients in said common virtual space does not exceed the number of receiving clients in the request for media content transmission; multicasting the media content being requested to the receiving clients in said common virtual space; and managing the media content multicast by at least one receiving client.

According to an embodiment, an apparatus is configured to divide the total price by the number of receiving clients or divide the total price into cents.

According to an embodiment, an apparatus is configured to receive a payment from at least one receiving client, wherein the received payments cover the total price.

According to an embodiment, an apparatus is configured to query a price for the requested media content from a content server for determining the total price.

According to an embodiment, an apparatus is configured to deliver information on the payment divisions to a pricing server for collecting the payment divisions.

According to an embodiment, the media content being requested is a video content.

According to an embodiment, an apparatus is configured to gather the receiving clients into a virtual space.

According to a third aspect, computer program product comprises a computer program code configured to, with a processor, to perform at least the following: receiving a request for media content transmission from a receiving client via said network, said request comprising at least information identifying the media content being requested and the number of receiving clients participating to said media content transmission in a common virtual space; determining a total price for the media content based on the information being included in the request; dividing the total price between the receiving clients participating to said media content transmission in said common virtual space; delivering information on the payment divisions to said receiving clients participating to said media content transmission in said common virtual space; receiving a confirmation when all payment divisions have been received; controlling that the number of the receiving clients in said common virtual space does not exceed the number of receiving clients in the request for media content transmission; multicasting the media content being requested to the receiving clients in said common virtual space; and managing the media content multicast by at least one receiving client.

### Description of the Drawings

In the following, various embodiments of the invention will be described in more detail with reference to the appended drawings, in which
- Fig. 1: shows an example of the system configuration according to an embodiment;
- Fig. 2: shows a simplified flowchart of a method performed by a social TV server; and
- Fig. 3: shows a simplified flowchart of method performed by a client device.

### Detailed Description of the Embodiments

In the following, several embodiments of the invention will be described in the context of Social TV and Video on Demand (VoD). It is to be noted, however, that the invention is not limited to Social TV and VoD. In fact, the different embodiments have applications widely in any social multicast environment where payment and deliverable media content can be commonly shared between users being connected together or at least to a certain service via a network. The network may comprise a wireless network (e.g., a cellular network, wireless local area network, wireless personal area network, wireless metropolitan area network, and/or the like), a wireline network, or some combination thereof, and in some embodiments the network comprises at least a portion of the internet.

As said, an embodiment of the invention relates to Social TV and to paying for a media content (e.g. video on demand) that will be watched together by more than one person in a common virtual space. One remarkable feature of the Social TV is that people can experience watching the same content simultaneously without having to be necessarily in the same physical location. This means that the people are able to share a same (i.e. a common) virtual space (e.g. a virtual room) in order to watch the commonly transmittable content. Not being in the same physical location is not, however, a requirement, because users may have a device with displays of limited size, whereby watching the shared content, in the common physical location but with different display devices is also possible in the context of Social TV. The Social TV utilizes the connectivity between the display devices. The display device can be a television being connected to Internet, an IPTV STB or any computer having access to a web television. Term "any computer" includes desktop, laptop and tablet computers, but also mobile communication devices, such as smartphones and cellphones.

Watching together free content such as free television channels within the context of Social TV, is easy to implement, but there are no known solutions in the market for paying for a commonly transmittable content together or on somebody's behalf. Thus, one of the purposes of the present solution is to solve issues relating to questions how viewers can rent/buy content together to watch it commonly online and how would such a system work. Therefore one of objects of the present solution to provide a solution by means of which it is possible to pay for a content in Social TV environment and to authorize sending the content to the such receivers who have paid for it. In addition, another object of the present solution is to provide a solution by means of which it is possible to receive a paid content if somebody else has paid it.

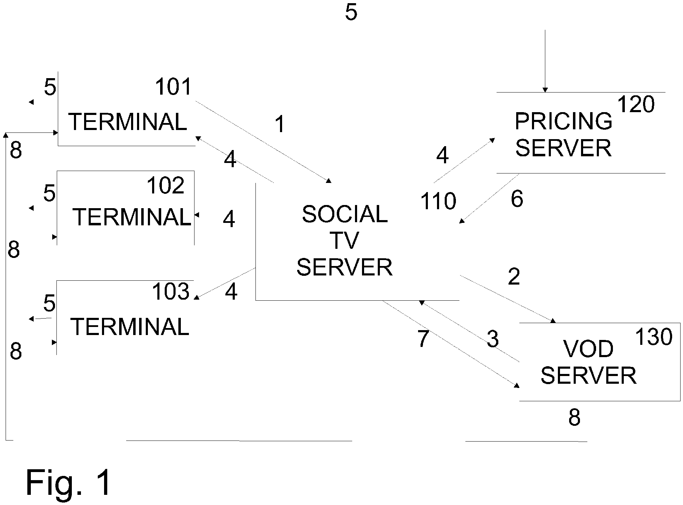

Fig. 1 illustrates an example of the system carrying out the present solution. In this example, there are three users (i.e. viewers) that desire to watch the commonly transmittable video content together regardless of the fact that they are located in different physical locations. The amount of viewers is only an example, and it is appreciated that the any number above one is possible.

Each of the users has some kind of a device (101, 102, 103) that is both capable of displaying video content but also capable of connecting to a network. Examples of the devices (101, 102, 103) were mentioned above. The present system comprises a service, i.e. social TV server, 110 that is capable of gathering the viewers into same virtual space, showing the content available for rent or for sale and acting as an interface to the video content. The service can be presented to the users on the browser of their terminals in the form of virtual watching rooms or home theatre rooms, where all users can commonly enter. The service may also be a special Social TV application being dedicated for this purpose. The service may also comprise means for users to communicate with each other e.g. by chatting and by voice communication, but the service can also operate without any communication functionality. Therefore, the communication can be done external to the service and by using other ways of communication.

In addition, the present system may comprise a content library or a content server, such as a VoD server 130 being provided by an operator and being configured to store at least the deliverable content. The content server can further be connected to a movie database for obtaining more detailed information on the content, but the content library can also include a certain amount of information on each item in the library.

Each user may browse the content library in the VoD server 130 through the social TV server 110 by their terminals 101, 102, 103. Once one of the users (e.g. user of terminal 101) founds something interesting, s/he can show it to the other users as well. The social TV server 110 may include a function, by means of which the item (e.g. a movie) from the content server 130 may be proposed to be rented or bought to the other users (e.g. users of terminals 102, 103). The proposal can be made within the virtual watching room, but also in a chat/messaging application being related to the Social TV service.

The other users (of terminals 102, 103) may accept the proposal simply by selecting an "accept"-selection by their terminal from the user interface of the of the virtual watching room in the social TV server, or reject by selecting a "reject" -selection. The user who selects the rejection may be given a possibility to propose a new item from the library in the form of a counterproposal.

When all the users have accepted the proposal, the user (i.e. user of terminal 101) who has proposed it, may select the item to be rented/bought. In another embodiment anyone of the users in the common virtual watching room can perform the renting/buying process, despite who has proposed it. When the item is selected, the social TV server 110 is configured to display the price for the item based on e.g. how many persons are able to view the movie (i.e. how many persons have been logged into the same virtual watching room), the format of the video content (i.e. selection between high definition (HD) quality, standard-definition (SD) quality or even lower quality suitable for mobile devices) or a combination of these. It is also possible to the viewers to select the quality that the viewer in question desires to have. Therefore, the price for the item can be based on determination how many viewers requests for HD quality, how many viewers request SD quality, and how many viewers wishes to have a lower quality. The price is then set according to that determination.

The social TV server 110 can propose different pricing schemes, for example that two viewers equals to six euros and five viewers equals to ten euros. If the virtual watching room contains e.g. four persons, the users are given possibility to invite yet another user to the virtual watching room to watch the movie in order to utilize the more tempting offer. The invitation can be made by text message (such as SMS (Short Message Service)) or by an email via the service or within the Social TV application. When the user selects the price and the social TV server determines that at least that many users are participating to watch the movie, the sum is divided by the number of viewers.

In another embodiment, it is possible that only one user is alone in the virtual room, and decides to rent/buy a movie for e.g. three persons. The price is set accordingly. By this the user is given a possibility to invite two more persons to the virtual room. The invitation can be personal or general "first-come-first-serve". After these two more persons have entered the virtual room, the virtual watching room is closed.

Yet, in another embodiment, there is no virtual watching room created, but once a user has rented/bought the movie and specified how many users the movie is rented/bought for, the virtual watching room is created dynamically.

Yet, in another embodiment, there is no possibility to invite viewers to the virtual watching room. When a certain group of viewers have been entered to the virtual watching room and selected a movie - and a price has been set, there is no longer an option to additional users to enter the virtual room.

In each of the previous embodiments, the paying process may contain the following steps. The social TV server 110 may inform that the item can be paid by sending e.g. text message ("credit") to a specific number. The amount of credits being needed may equal to number of persons participating to the session. The price of one text message can thus be dependent on the total price of the movie being divided by the number of viewers.

Another option for charging the price is to show the payment as a stack that needs to be fulfilled in order to receive the content. In such a solution the total price may be divided into cents, whereby the viewers may decide how much each of them would pay.

Instead of using text messages for paying for the content, the user may have an account in the Social TV service. The charge from the account can be made as postpaid (by an invoice) or prepaid (deposit on the account). It is appreciated that any other known paying method is possible for paying for the content, for instance, PayPal™, online bank payment, a credit card.

The user interface of the social TV server 110 may show, how many credits (i.e. text messages) or how many payment divisions are needed until the movie can start. The users may decide whether they pay the total price together or not. One of the users may pay for everyone, or each of the users may pay the equal amount, or each user may decide how much s/he is going to pay. This means that the pricing server may receive a payment from at least one receiving client, wherein the received payments cover the total price.

As soon as the total price is completed, the movie will begin and it is seen by the people in the virtual watching room regardless if they have personally paid for it or not.

In the technical implementation each virtual room at the social TV server has a specific room identification (room_id) that is used in associating whether a certain virtual room can receive a movie or not. The users signed into a virtual watching room with the same room identification will see the same movie whenever the movie has been rented/bought and it has started.

The social TV server 110 may control all the user interactions relating to a management of the media content multicast by at least one receiving client (e.g. the virtual rooms, the movie library frontend, the streaming client for the movies, selection of a suitable video format for each terminal, etc.). Each movie or each content item in the content server 130 has an identification (e.g. movie_id) and a pricing scheme for that content item. The content server 130 may also be connected an external (e.g. movie) database that contains a detailed information on the content item or the content server 130 may include such detailed information by itself.

In order to use the service, one user or one of the users selects (1) a movie (being an example of the content item) and amount of viewers and sends this information to the social TV server 110. Based on this event, a specific and unique event identification (event_id) is created. This event identification is a key to identify what movie (movie_id) is being rented/bought and for which virtual room (room_id) and for which price. In order to determine the price, the social TV server sends (2) a query to the content server 130. The content server 130 sends (3) the price information to the social TV server 110.

Social TV server 110 is configured to send (4) the total price, number of viewers and an event identification to the pricing server 120. In addition the social TV server 110 may send (4) a request for payment to each terminal 101, 102, 103. The pricing server 120 is configured to collect (5) the payment from the terminals 101, 102, 102 as described above.

When the complete payment has been done, the pricing server 120 informs (6) the social TV server 110 how many payments have been collected for a certain event, event_id. The social TV server 110 will publish this information to the viewers also. Once all the payments have been collected, the social TV server 110 makes a request to the content server 130 to start multicasting. The content server 130 starts multicasting (8) the movie which is related to the event identification (event_id) and to the virtual room identification (room_id). The multicasting in this example is targeted directly to the terminals 101, 102, 103. In some other example, the multicasting can be performed via the social TV server 110. The actual multicasting will be done using methods commonly known in the art.

If a complete payment is not received in time (time limit specified by the Social TV server), the already received payments may be returned to the users having paid their own share. It is also possible, that such an already made payment may be put into user's account for expecting a new order. The selection between these alternatives may be made by each user.

The social TV server is also configured to perform the access control for the virtual watching rooms. For example, the social TV server may control that the number of receiving clients in the common virtual watching room does not exceed the number of receiving clients being specified in the request for media content transmission.

The users can exit the virtual watching room before the movie has ended. They are also given a possibility to enter the virtual watching room again, if the movie is still going on. The users may also decide to have a common break, when the movie is paused. If a certain terminal has problems when showing the content (e.g. transmission errors or interruptions), it is possible, for instance, to decrease the transmission quality for this terminal in question in order to improve the transmission.

In the previous description, the servers 110, 120, 130 are disclosed as individual elements. It is appreciated that the servers' 110, 120, 130 functions, as described above, can be performed by a single device or can be divided between any number (above one) of devices.

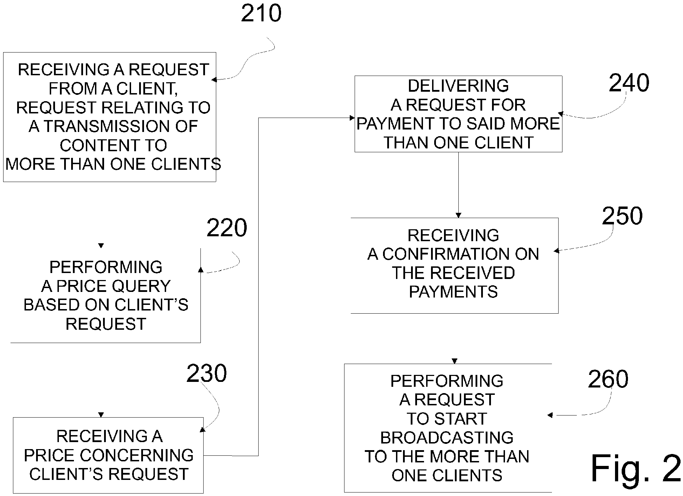

Figure 2 illustrates simplified the actions being performed at the social TV server. At first, the social TV server receives (210) a request from a client. The request relates to a transmission of e.g. video content to said requesting client and at least one other client. Based on the request, the social TV server perform (220) a price query from the content library. After receiving (230) the price from the content library, the social TV server delivers (240) a request for payment to all clients. The pricing database collects the payments, and sends a confirmation on the received payments to the social TV server for receiving (250). Based on this confirmation, the social TV server performs (260) a request to the content library to start multicasting of the requested content to said clients.

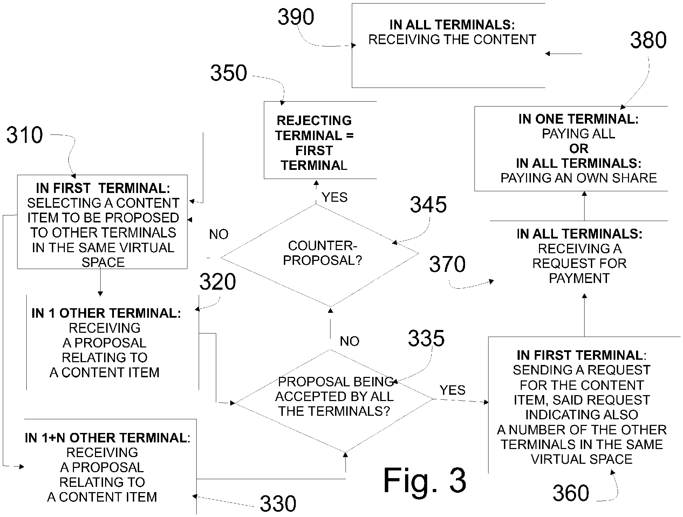

Figure 3 is an illustration of actions being performed at the client terminals. Figure 3 combines actions of all terminals, whereby in each step it is mentioned, which of the terminals is performing the step in question. At first, a first terminal selects (310) a content item to be proposed to other terminals in the same virtual space. The other terminals receive (320, 330) the proposal from the first terminal. In order to go on with the renting/buying process, the other terminals need to accept (335) the proposal. If, however, one of the terminals rejects the proposal, the terminal can make a counterproposal (345) or leave the virtual watching room. In the case of the counterproposal, the terminal who rejected the first proposal, will become the first device and make the selection according to step 310. This process goes on until all the terminals have accepted the proposal (335). In this example, the terminal, who made the acceptable proposal (i.e. first terminal), then sends (360) a request to the social TV server for the item to be rented/bought. The request indicates also the number of terminals being participating to the session. After sending the request, all the terminals receive (370) a request for payment. The payment (380) can be done individually in each terminal, or by one of terminals on behalf of the rest of the terminals, or by allowing each of the viewers to decide his/her own division for the payment. After successful payment, all the terminals receive (390) the content being requested.

The various embodiments of the invention can be implemented with the help of computer program code that resides in a memory and causes the relevant apparatuses to carry out the invention. For example, a terminal device may comprise circuitry and electronics for handling, receiving and transmitting data, computer program code in a memory, and a processor that, when running the computer program code, causes the terminal device to carry out the features of an embodiment. Yet further, a server device may comprise circuitry and electronics for handling, receiving and transmitting data, computer program code in a memory, and a processor that, when running the computer program code, causes the server device to carry out the features of an embodiment.

It is obvious that the present invention is not limited solely to the above-presented embodiments, but it can be modified within the scope of the appended claims.

## Claims

1. A method for delivering media content in social multicast environment comprising at least one server and at least two receiving clients and a network being formed between said at least one server and at least two receiving clients, the method comprising:
- receiving a request for media content transmission from a receiving client via said network, said request comprising at least information identifying the media content being requested and the number of receiving clients participating to said media content transmission in a common virtual space;
- determining a total price for the media content based on the information being included in the request;
- dividing the total price between the receiving clients participating to said media content transmission in said common virtual space;
- delivering information on the payment divisions to said receiving clients participating to said media content transmission in said common virtual space;
- receiving a confirmation when all payment divisions have been received;
- controlling that the number of the receiving clients in said common virtual space does not exceed the number of receiving clients in the request for media content transmission;
- multicasting the media content being requested to the receiving clients in said common virtual space; and
- managing the media content multicast by at least one receiving client.

2. The method according to claim 1, further comprising
- dividing the total price by the number of receiving clients or dividing the total price into cents.

3. The method according to claim 1 or 2, further comprising
- receiving a payment from at least one receiving client, wherein the received payments cover the total price.

4. The method according to any of the previous claims 1 to 3, further comprising
- querying a price for the requested media content from a content server for determining the total price.

5. The method according to any of the previous claims 1 to 4, further comprising:
- delivering information on the payment divisions to a pricing server for collecting the payment divisions.

6. The method according to any of the previous claims 1 to 5, wherein the media content being requested is a video content.

7. The method according to any of the previous claims 1 to 6, further comprising gathering the receiving clients into a virtual space.

8. An apparatus comprising a processor, memory including computer program code, the memory and the computer program code configured to, with the processor, cause the apparatus to perform at least the following:
- receiving a request for media content transmission from a receiving client, said request comprising at least information identifying the content being requested and the number of receiving clients participating to said media content transmission in a common virtual space;
- determining a total price for the media content based on the information being included in the request;
- dividing the total price between the receiving clients participating to said media content transmission in said common virtual space;
- delivering information on the payment divisions to said receiving clients participating to said media content transmission in said common virtual space;
- receiving a confirmation when all payment divisions have been received;
- controlling that the number of the receiving clients in said common virtual space does not exceed the number of receiving clients in the request for media content transmission;
- multicasting the media content being requested to the receiving clients in said common virtual space; and
- managing the media content multicast by at least one receiving client.

9. An apparatus according to claim 8, further comprising computer program code configured to, with the processor, cause the apparatus to perform at least the following:
- dividing the total price by the number of receiving clients or dividing the total price into cents.

10. An apparatus according claim 8 or 9, further comprising computer program code configured to, with the processor, cause the apparatus to perform at least the following:
- receiving a payment from at least one receiving client, wherein the received payments cover the total price.

11. An apparatus according to any of the previous claims 8 to 10, further comprising computer program code configured to, with the processor, cause the apparatus to perform at least the following:
- querying a price for the requested media content from a content server for determining the total price.

12. An apparatus according to any of the previous claims 8 to 11, further comprising computer program code configured to, with the processor, cause the apparatus to perform at least the following:
- delivering information on the payment divisions to a pricing server for collecting the payment divisions.

13. An apparatus according to any of the previous claims 8 to 12, wherein the media content being requested is a video content.

14. An apparatus according to any of the previous claims 8 to 13, further comprising computer program code configured to, with the processor, cause the apparatus to perform at least the following:
- gathering the receiving clients into a virtual space.

15. A computer readable medium comprising a computer program code configured to, with a processor, to perform at least the following:
- receiving a request for media content transmission from a receiving client via said network, said request comprising at least information identifying the media content being requested and the number of receiving clients participating to said media content transmission in a common virtual space;
- determining a total price for the media content based on the information being included in the request;
- dividing the total price between the receiving clients participating to said media content transmission in said common virtual space;
- delivering information on the payment divisions to said receiving clients participating to said media content transmission in said common virtual space;
- receiving a confirmation when all payment divisions have been received;
- controlling that the number of the receiving clients in said common virtual space does not exceed the number of receiving clients in the request for media content transmission;
- multicasting the media content being requested to the receiving clients in said common virtual space; and
- managing the media content multicast by at least one receiving client.
